# EUROPEAN PATENT APPLICATION

(11) **EP 2 495 168 A1**
(43) Date of publication of application: **05.09.2012**
(21) Application number: 12250043.2
(22) Date of filing: 28.02.2012
(51) Int. Cl.: B64D 47/08, B64F 1/00, H04N 7/18, G08G 5/06

(54) **Airplane cockpit video system**

(30) Priority: 02.03.2011 US 201113038931
(71) Applicant: Rosemount Aerospace Inc., Burnsville, MN 55306 (US)
(72) Inventor: Benning, Kevin J., Lakeville, Minnesota 55044 (US); Haugen, Eric D., Lakeville, Minnesota 55044 (US); Mette, John H., Faribault, Minnesota 55021 (US); Morris, John R., St. Louis Park, Minnesota 55426 (US)
(74) Representative: Hargreaves, Timothy Edward

(57) **Abstract**

A cockpit video system (100) for an airplane includes a camera assembly (102a-c) positioned on the airplane (10), a video monitor (106) for receiving a signal from the camera assembly (102a-c) , and a video processing module (104) for electronically aligning the signal so that a pilot of the airplane (10) is presented with an aligned image on the video monitor (106). Preferably, the signal is an over-sized field of view and the alignment module performs the electronic aligning by cropping and re-aligning the over-sized field of view to fit the video monitor (106). The camera assembly (102a-c) is adapted and configured to attach to the exterior of the airplane (10).

## Description

### BACKGROUND OF THE DISCLOSURE

### 1. Field of the Disclosure

The subject disclosure relates to systems for assisting airplane pilots during runway taxi, and more particularly to an improved system for providing positional video to the pilot.

### 2. Background of the Related Art

Taxi-aid camera systems provide pilots with supplementary guidance for steering the airplane. Typically, the runway and even the airplane itself are provided with markings. By using views from one or more cameras of the airplane and markings, the pilots are able to determine airplane position to property steer the airplane.

A camera is mounted in a location to provide a comprehensive view of the airplane. The vertical tail fin of the airplane is a common location for such a camera. When the camera is provided with a wide angle lens, the captured image can extend from wing tip to wing tip.

The cameras are mechanically aligned to the airplane so that that on screen markings are also aligned to the airplane. In order for the image to be satisfactory, tight mechanical tolerances on the camera housing assembly and camera housing assembly to aircraft installation must be met. Despite the tight tolerances, mechanical adjustment that is difficult and time consuming is also required.

Some examples are illustrated in: U.S. Patent No. 7,844,392 issued on November 30, 2010 to Dubourg; U.S. Patent Application Publication No. 2007/0085907 published on April 19, 2007 to Beauregard; and U.S. Patent Application Publication No. 2003/0125141 published on November 20, 2003 to Zakrewski et al., each of which is incorporated herein by reference.

### SUMMARY OF THE INVENTION

In view of the above, there is a need for an improved cockpit video system and method for aligning same which permits easy installation and aids in assuring adequate alignment of the image displayed for pilots.

One embodiment of the subject technology is directed to a cockpit video system for an airplane including a camera assembly positioned on the airplane, a video monitor for receiving a signal from the camera assembly, and a video processing module for electronically aligning the signal so that a pilot of the airplane is presented with an aligned image on the video monitor. Preferably, the signal is an over-sized field of view and the alignment module performs the electronic aligning by cropping and re-aligning the over-sized field of view to fit the video monitor. The alignment module may correct for 4 degrees of misalignment of the signal or more in two axis to yield a final image alignment within 0.25 degrees or similar specifications as desired. The camera assembly is adapted and configured to attach to the fuselage, wings, or tail planes of the airplane.

The cockpit video system may also include multiple cameras, each of which could undergo the same alignment procedure. A third camera assembly is adapted and configured to mount on an underside of the airplane to provide a view for an on board entertainment system. The video monitor and the video processing module can be an integral unit or separate components.

Another embodiment of the subject technology is directed to a method for operating a cockpit video system of an airplane including the steps of mounting a camera assembly on the airplane to capture an image of the airplane, mounting a video monitor in a cockpit of the airplane for receiving a signal of the image from the camera assembly, prompting a maintenance operational mode to align the image on the video monitor, processing the image to create an aligned image by electronically adjusting the image to at least one reference mark, and presenting the aligned image on the video monitor. The electronic adjustment of the image may be automated by using image recognition software to identify the airplane in the image.

The method also can apply a reference mark to the airplane. The image recognition software can identify the reference mark in the image and adjust the image by moving the reference mark to a pedetermined location in the aligned image. The reference mark may be temporarily attached to the airplane during installation of the system, then removed. The method could also allow for manual alignment of the image to a horizontal and/or veritcal centerline on the video monitor. The reference mark could also be an outline of an airplane selectively displayed on the video monitor. The image recognition software can also be configured to identity the at least one reference mark in the image and adjust the image by moving the reference mark to a pedetermined pixel location.

Still another embodiment of the subject technology is directed to a method for aligning a cockpit video system of an airplane including the steps of capturing an image of the airplane from a taxi-aid camera, entering a maintenance mode to align the image on a video monitor in a cockpit of the airplane, analyzing the image to electronically align the airplane in the image to at least one reference mark, and presenting the aligned image on the video monitor. The image may be automatically electronically aligned by using image recognition software to identify the airplane in the image. The airplane may have an airplane reference mark so that the at least one reference mark and the airplane reference mark are configured to visually indicate a level of airplane alignment.

It should be appreciated that the present technology can be implemented and utilized in numerous ways, including without limitation as a process, an apparatus, a system, a device, a method for applications now known and later developed or a computer readable medium. These and other unique features of the system disclosed herein will become more readily apparent from the following description and the accompanying drawings.
Any feature in one aspect may be applied to any other aspect, in any appropriate combination. For example, device features may be applied as method features and vice versa. Features from any combination of independent or dependent claims may be combined in further embodiments regardless of the dependency of those claims, and regardless of whether those claims are interdependent.

### BRIEF DESCRIPTION OF THE DRAWINGS

So that those having ordinary skill in the art to which the disclosed system appertains will more readily understand how to make and use the same, reference may be had to the drawings wherein:

Figure 1 is a perspective view of an airplane having a cockpit video system in accordance with a preferred embodiment of the subject disclosure.

Figure 2 is a somewhat schematic view of the cockpit video system in accordance with a preferred embodiment of the subject disclosure.

Figure 3 is a flowchart illustrating an embodiment of a process for installation and set up of the cockpit video system of Figure 2.

Figure 4 is a raw image from a camera assembly of the cockpit video system of Figure 2.

Figure 5 is a processed image for display on a video monitor of the cockpit video system of Figure 2.

### DETAILED DESCRIPTION OF PREFERRED EMBODIMENTS

The present disclosure overcomes many of the prior art problems associated with airplane cockpit video systems that assist pilots during runway taxi and at other times. The advantages, and other features of the system disclosed herein, will become more readily apparent to those having ordinary skill in the art from the following detailed description of certain preferred embodiments taken in conjunction with the drawings which set forth representative embodiments of the present invention and wherein like reference numerals identify similar structural elements.

All relative descriptions herein such as left, right, up, and down are with reference to the Figures, and not meant in a limiting sense. The illustrated embodiments can be understood as providing exemplary features of varying detail of certain embodiments, and therefore, features, components, modules, elements, and/or aspects of the illustrations can be otherwise combined, interconnected, sequenced, separated, interchanged, positioned, and/or rearranged without materially departing from the disclosed systems or methods.

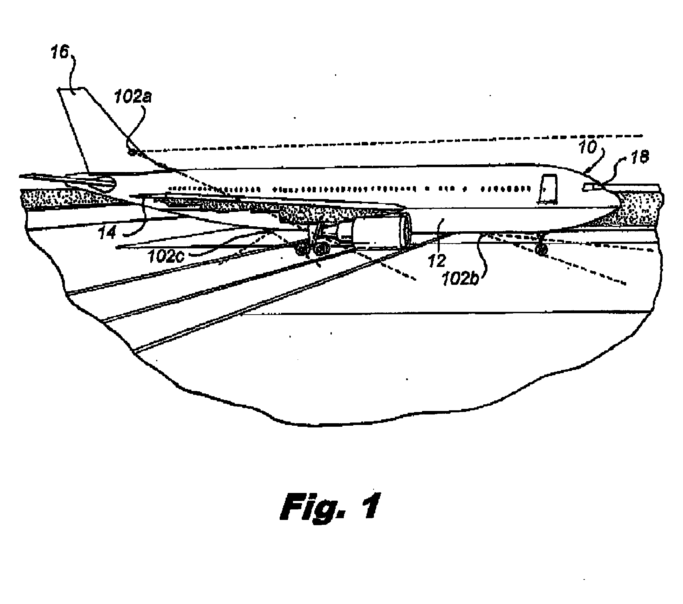

Referring now to Figure 1, a perspective view of an airplane 10 having a cockpit video system 100 in accordance with a preferred embodiment of the subject disclosure is shown. The airplane 10 has a fuselage 12 with wings 14 extending horizontally and a tail 16 extending vertically. The cockpit video system 100 mounts one or more camera assemblies 102a-c to capture images for display in the cockpit 18.

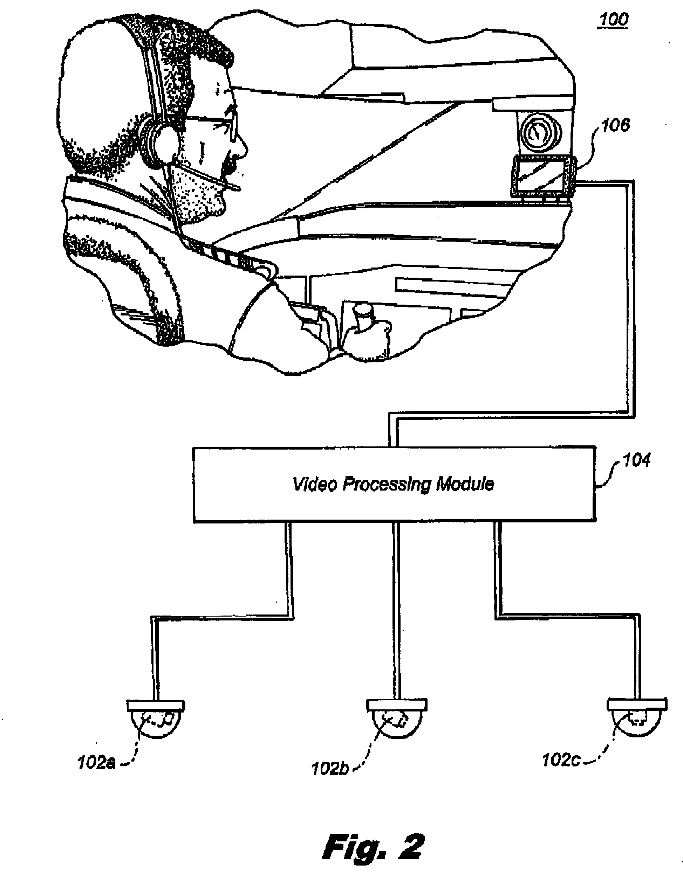

Referring now to Figure 2, a somewhat schematic view of the cockpit video system 100 in accordance with a preferred embodiment of the subject disclosure is shown. The cockpit video system 100 could utilize only a single camera or a plurality of camera assemblies 102a-c, three being shown. As shown in Figure 1, the cockpit video system 100 includes two taxi-aid camera assemblies 102a, 102b and a landscape camera assembly 102c. The first camera assembly 102a is positioned in the vertical tail 16. An area near a top of the airplane tail 16 should house the camera assembly 102 to provide a proper vantage point but other locations may be suitable depending upon the airplane configuration. The second camera assembly 102b is positioned on the underside or belly of the fuselage 12. The taxi-aid camera assemblies 102a, 102b provide views generally forward and surrounding the airplane 10. In alternative embodiments, varying numbers of camera assemblies ere utilized, which may be placed anywhere such as on the horizontal stabilizers, airplane wings and the like.

Preferably, the first camera assembly 102a provides a view of the main gear, the surroundings of the leading edge of the vertial tail 16, and a horizontal span nearly from wing tip to wing tip. In one embodiment, the camera assemblies 102a, 102b have the same native field of view but the resulting images are processed and may display differently. In another embodiment, the first camera assembly 102a has an 80 degree horizontal field of view and a 45 degree vertical field of view. The second camera assembly 102b captures a view of the nose gear and surroundings. The second camera assembly 102b has a 90 degree horizontal field of view and a 57 degree vertical field of view. The landscape camera assembly 102c has a downward view for capturing scenery below the airplane.

Each camera assembly 102a-c can have a wide angle lens to provide an over-sized field of view. Each camera assembly 102a-c is retained in a housing (not explicitly shown) for flush mounting in the respective location. Alternatively, a slight bulge may be formed in the airplane 10 so that the camera assembly 102a-c may acquire a proper view through a window in the respective housing. The housing window is a durable scratch and impact resistant material as well as heated to provide clarity and protection under harsh conditions.

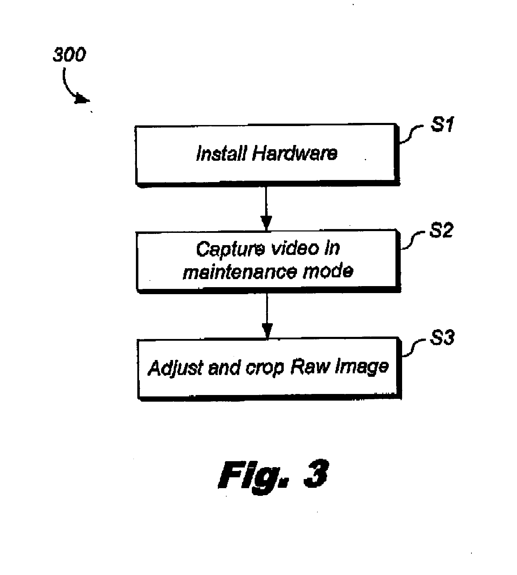

Still referring to Figure 2, the raw signals from the camera assemblies 102a-c are transmitted to a video processing module 104. The video processing module 104 acts as a multiplexer so that a single display can be utilized for all of the images or a single signal can be selected as desired. The video processing module 104 also electronically aligns the signals from the taxi-aid camera assemblies 102a, 102b as described in more detail below with respect to Figures 3-5. The raw signals may be transmitted through wires, fiber optics, wirelessly and the like as is well known to those of ordinary skill in the pertinent art.

Once the raw signals are processed into an aligned image signal by the video processing module 104, the aligned image signal or signals are displayed on a video monitor 106 for review by the pilot. Any of the signals may also be presented in the entertainment monitors for passenger entertainment or information. The landscape camera assembly 102c may also capture scenic images primarily for entertainment purposes. The video processing module 104 can also tile or mosaic multiple images on a single monitor or plurality of monitors. The video processing module 104 and monitor 106 may be combined into a single unit or exist as separate components that serve other purposes at other times. For example, the monitor 106 may present other images to the pilots from additional camera assemblies (not shown explicitly) or non-video related information.

Figure 3 is a flowchart illustrating an embodiment of a process 300 for installation and set up of the cockpit video system of Figure 2. Initially, at step S1, the camera assemblies 102a-c, the video processing module 104, and monitor 106 are installed and inter connected. At step 52, the camera assemblies 102a-c are powered on to capture video images that are transmitted to the video processing module 104, which is set in maintenance mode that may only be available for grounded aircraft. Due to lens, sensor and housing tolerances, internal camera misalignment occurs. Further, the camera assemblies 102a-c are also misaligned to the airplane 10. It is possible to pin the cameras and housing to reduce this misalignment, however with the subject technology, pinning is not required.

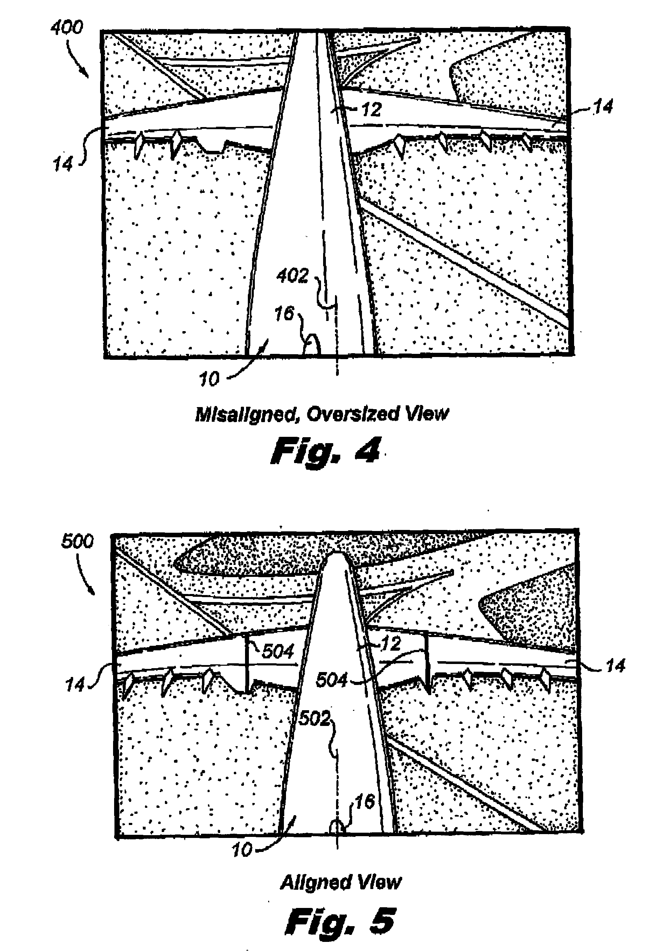

In maintenance mode, the video processing module 104 presents a raw image that may be adjusted with real-time feedback by a technician. Referring additionally to Figure 4, an example of a possible raw image 400 is shown. The raw image 400 is oversized with respect the final image used during taxi. The raw image 400 may also be misaligned both vertically and horizontally. To illustrate the misalignment, a centerline 402 is shown on Figure 4. As can be seen, the airplane 10 and tail 16 are to the left of the centerline 402 indicating horizontal misalignment. Additionally, the area in front of the airplane 10 cannot be seen indicating vertical misalignment.

Still referring to Figure 3, to perform aligning adjustments, either or both of the video processing module 104 and the video monitor 106 includes a user interface. At step S3, the technician uses the user interface to adjust or realign the raw image 400 to produce the processed image 500 shown in Figure 5 and the process 300 ends. In order to align the image, the video processing module 104 crops and re-aligns the over-sized raw image 400 based upon inputs from the user interface.

In the processed image 500, the airplane 10 is aligned with the center line 502 and the area in front of the airplane 10 can be seen indicating horizontal and vertical alignment. The processed image 500 is adjusted to include the desired features of interest. The processed image 500 also includes optional alignment reference marks 504. The reference marks 504 may be utilized with various structure of the airplane 10 to assist a technician in proper alignment. Additionally, the airplane 10 may include temporary or permanent visual indicia as reference points to facilitate correction of the raw image 400. In one embodiment, the video processing module 104 includes a pointing mechanism such as a mouse with associated software so the technician can apply a virtual rectangle around the portion of the raw image 400 that becomes the processed image 500.

In one embodiment, the video processing module 104 corrects for 4 degrees of mechanical misalignment of the raw image 300 although more and less corrections such as 7 degrees, 5.5 degrees, or 3 degrees may be accomplished depending upon the requirements resulting from internal camera misalignment and camera assembly to airplane misalignment. The video processing module 104 may also include a separate display monitor (not shown) or output connection for temporary connection of temporary monitor and components to be used as a user interface.

As a benefit of having the video processing module 104 electronically correct the misalignment, the mechanical tolerances and alignment pinning on installation of the camera assemblies 102a-c can be loosened or removed. The cost savings of simpler, lower cost camera assemblies 102a-c and simplification of the installation process are significant.

In another embodiment, the cockpit video system 100 utilizes image recognition software to automatically align on-screen views of the airplane. The image recognition software could be achieved by using known airplane geometry, fiducial alignment marks applied to the airplane (permanently or temporarily), fiducial marks applied to the image (optically or electronically) and the like. The video monitor 106 could be precalibrated to have a set location for one or more alignment marks or structures on the airplane. Once the relevant reference marks or structures are identified, the video processing module 104 simply moves the marks or structures to the precalibrated position for same to accomplish the alignment. The cockpit video system 100 could also allow manual alignment to fiducial marks and the like.

For example, the fiducial marks could be the centerline 502 of Figure 5 embossed into the monitor assembly along with other marks on the monitor frame such as to mark a horizontal point of the forward tip of the airplane image or a top of the wing position. Further fiducial marks other than the reference marks 504 could be included on the screen image. For example, the screen image could include a thin dashed outline of the respective airplane in maintenance mode so that the live image is simply slid there under (manually or electronically) to accomplish the alignment. It is also envisioned that an airplane reference mark is matched to a video reference mark so that the video reference mark and the airplane reference mark visually indicate a level of airplane alignment in degrees and the like. The image recognition software can also be configured to identify the reference mark in the image and adjust the image by moving the reference mark to a pedetermined pixel location.

As would be appreciated by those of ordinary skill in the pertinent art, the subject technology is applicable to use on helicopters, automobiles and the like. The functions of several elements may, in alternative embodiments, be carried out by fewer elements, or a single element. Similarly, in some embodiments, any functional element may perform fewer, or different, operations than those described with respect to the illustrated embodiment. Further, relative size and location are merely illustrative and it is understood that not only the same but many other embodiments could have varying depictions and configurations.

While the invention has been described with respect to preferred embodiments, those skilled in the art will readily appreciate that various changes and/or modifications can be made to the invention without departing from the spirit or scope of the invention as defined by the appended claims. For example, each claim may depend from any or all claims in a multiple dependent marmer even though such has not been originally claimed.

## Claims

1. A cockpit video system for an airplane comprising:
a camera assembly positioned on the airplane;
a video monitor for receiving a signal from the camera assembly; and
a video processing module for electronically aligning the signal so that a pilot of the airplane is presented with an aligned image on the video monitor.

2. A cockpit video system as recited in Claim 1, wherein the signal is an over-sized field of view and the alignment module performs the electronic aligning by cropping and re-aligning the over-sized field of view to fit the video monitor.

3. A cockpit video system as recited in Claim 1, wherein the alignment module corrects for 4 degrees of misalignment of the signal in two axes to yield a final image alignment within 0.25 degrees.

4. A cockpit video system as recited in Claim 1, wherein the camera assembly is adapted and configured to attach within a tail of the airplane.

5. A cockpit video system as recited in Claim 1, further comprising a second camera assembly adapted and configured to view the nose landing gear of the airplane.

6. A cockpit video system as recited in Claim 1, wherein at least one of:-
a) the video processing module and the camera assembly are an integral unit;
b) the video monitor and the video processing module are an integral unit.

7. A method for operating a cockpit video system of an airplane comprising the steps of:
mounting a camera assembly on the airplane to capture an image of the airplane;
mounting a video monitor in a cockpit of the airplane for receiving a signal of the video image from the camera assembly;
processing the video image to create an aligned image by electronically adjusting the image to at least one reference mark; and
presenting the aligned image on the video monitor.

8. A method as recited in Claim 7, further comprising the step of automatically electronically adjusting the video image, wherein
optionally:-
the method further comprises the step of using image recognition software to identify the airplane in the video image.

9. A method as recited in Claim 7, further comprising the step of applying a reference mark to the airplane from which to align the video image.

10. A method as recited in Claim 9, further comprising at least one of:-
a) the step of using image recognition software to identify the reference mark in the video image and adjust the video image by moving the reference mark to a pedetermined location in the aligned image;
b) the step of prompting a maintenance operational mode to align the video image on the video monitor, and wherein the reference mark is temporary.

11. A method as recited in Claim 9, wherein at least one of:-
a) the at least one reference mark is a centerline on the video monitor;
b) the at least one reference mark is an outline of an airplane selectively displayed on the video monitor.

12. A method for aligning a cockpit video system of an airplane comprising the steps of:
capturing an image of the airplane from a taxi-aid camera;
entering a maintenance mode to align the image on a video monitor in a cockpit of the airplane;
analyzing the image to electronically align the airplane in the image to at least one reference mark; and
presenting the aligned image on the video monitor.

13. A method as recited in Claim 12, further comprising the step of automatically electronically aligning the image by using image recognition software to identify the airplane in the image.

14. A method as recited in Claim 12, further comprising the step of applying an airplane reference mark to the airplane so that the at least one reference mark and the airplane reference mark are configured to visually indicate a level of airplane alignment.

15. A method as recited in Claim 12, wherein at least one of:-
a) the method further comprises the step of using image recognition software to identify the at least one reference mark in the image and automatically adjust the image by moving the reference mark to a predetermined pixel location;
b) the at least one reference mark is a centerline on the video monitor.
